# EUROPEAN PATENT APPLICATION

(11) **EP 0 907 118 A2**
(43) Date of publication of application: **07.04.1999**
(21) Application number: 98115559.1
(22) Date of filing: 19.08.1998
(51) Int. Cl.: G05B 19/00

(54) **Method and devices for the standardisation of the control functions of welding machines and welders fitted with the said devices**

(30) Priority: 04.09.1997 IT VI970148
(71) Applicant: Esseti S.r.l., 36030 Costabissara VI (IT)
(72) Inventor: Terzo, Maurizio, 36100 Vicenza (VI) (IT)
(74) Representative: La Ciura, Salvatore

(57) **Abstract**

The invention relates to a method for standardisation of the control functions of the type of welding machine with a mini wire-feeder (3), wherein:
- a control unit (4) with a memory (5) is fitted to the generator(1);
- an interface (6) designed to transmit to the said control unit signals corresponding to the settings input from the control panel of the said mini wire-feeder is applied to the mini wire-feeder (3);
- a program designed to receive standard signals from the said interface (6) and convert them into signals specific to the type of machine to which the said control unit (4) is fitted is stored in the said memory (5) of the said control unit.

## Description

This invention relates to a method and the corresponding devices which allows control of welding machine functions and parameters to be standardised, and enables the operator to use the same procedures to input the settings of any type of machine.

The method in accordance with the invention, which is designed in particular for semi-automatic MIG/MAG welding plants using remote mini wire-feeders, requires the application to the generator of an electronic card with a control unit designed for the specific type of welder, and the application to the mini wire-feeder of an interface able to interact with the said control unit, allowing the operator to input the commands and settings required in accordance with a single, standardised procedure.

The interface transmits the commands to the control unit, which controls the machine on the basis of the parameters input.

The method in accordance with the invention considerably simplifies the task, because the operator can use any kind of machine with no need to learn the details of its operation; moreover, the latest technological innovations, such as storage of welding programs and combinations of preset parameters corresponding to various operating situations, etc., can be used even with old machines not designed for that purpose.

The invention relates to large welding machines, in particular welding machines that comprise a basically fixed generator situated, for example, inside a building, and a mini wire-feeder, connected to the generator by suitable cables, which comprises a welding torch, a motor with cable winding devices, and a panel containing the various machine setting devices.

These welders are generally used on construction sites such as shipyards, where dozens or even hundreds of such machines are present.

However these welders, which may have been purchased at different times or from different manufacturers, sometimes display the various setting parameters differently or lack a suitable display interface.

In some cases, for example, a control which directly displays the number of Amps. supplied to the torch is operated to regulate the welding current.

In other cases, a setting dial only allows the operator to input a certain number of values, indicated, for example, by the numbers 1 to 10, but the power to which each number corresponds is not displayed.

Equally, in some cases the welding wire feed is regulated by directly inputting the feed rate, which may be displayed, for example, in centimetres per minute, while in other cases the operator can choose between a number of values, without knowing the actual speed to which they correspond.

Thus an operator who moves from one machine to another often encounters difficulties and has to perform a number of tests to familiarise himself with the new machine and input the welding settings required for the job to be performed.

Another drawback of existing machines is that the connections between mini wire-feeder and generator are of the "proprietary" type, ie. there is no universal type of connection between mini wire-feeder and generator.

For example, in some cases the mini wire-feeder is connected by a 7- or 8-wire cable and in other cases by a 25-wire cable; equally, the setting panels contain different devices and wiring.

This means that it is impossible to use the same mini wire-feeder for different generators or to make improvements, for example during maintenance operations, to take advantage of technical developments.

As generator technology has remained unchanged over the past few years, whereas the technology of user interfaces and the terminal control unit has developed considerably, it would be advantageous to be able to use these new technologies without having to replace the entire machine, which would be very expensive.

Malfunctions and wear are nearly always restricted to the mini wire-feeder, especially in the case of welders used in shipyards, where mini wire-feeders are exposed to a saline environment, and the majority of the cost of the machine (approx. 80%) is accounted for by the generator, which has undergone hardly any technical development over the years.

Under these circumstances, it is more economical to repair or replace the mini wire-feeder only and continue to use the generator rather than replacing the malfunctioning machine.

However, since each generator needs its own specific mini wire-feeder, as already explained, it is impossible to modernise the machine; the entire unit has to be replaced, because it is insufficient to replace or modernise the mini wire-feeder only.

The purpose of this invention is to offer a method that enables the current fleet of machines with their high-cost generators to be retained, but allows the mini wire-feeders and the various control and monitoring devices to be modernised.

For this purpose, the generator is fitted with control hardware which interfaces with any type of generator and presents a standard connection so that it can be connected to an interface applied to the mini wire-feeder which allows the operator to input commands in accordance with the same procedure for all welders.

The cables that connect the interface to the control unit will also advantageously be standardised and the same for all machines, thus allowing the same mini wire-feeder to be used for different types of generator.

In this way, it is possible to reuse all generators that are still operational, which account for much of the value of the welding equipment, but modernise the equipment merely by adding the control unit and corresponding interface and replacing the connections to the mini wire-feeder.

This new interface basically allows a new welding technology on the mini wire-feeder to be remote controlled by means of a control system that converts a conventional generator to a synergic generator, which can have a setting system that is user-friendly and above all always the same.

The functions of the mini wire-feeder (ie. the methods of monitoring and setting the welding parameters) consequently become the same on all machines and for all types of generator, thus making all welders compatible with new technologies.

This invention will now be described, by way of example but not of limitation, by reference to the single annexed figure, which contains a block diagram of a welder featuring the devices in accordance with the invention.

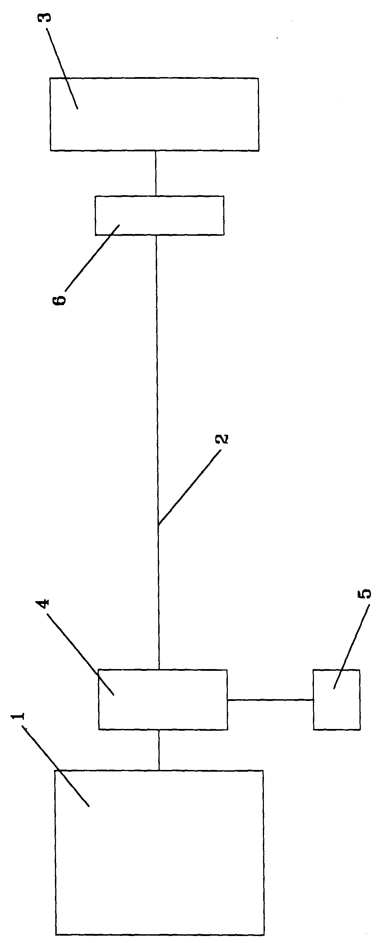

With reference to the figure, number 1 indicates the generator of a welding machine, connected via a cable 2 to a mini wire-feeder 3 which comprises a motor-driven cable winding reel, a welding torch and a panel with the various machine controls.

In accordance with the invention, a control unit 4 is fitted to generator 1; the said control unit, which is already known in the form of hardware, comprises a programmable memory such as an EPROM memory in which the data that enable this specific machine to be controlled are stored.

An interface 6, able to receive the signals input from the control panel fitted to the mini wire-feeder and send them along cable 2 to control unit 4, is applied to the mini wire-feeder.

At this point, the controls of the control panel on the mini wire-feeder can be the same for any kind of machine, as interface 6 sends signals to control unit 4 in accordance with the parameters input from the control panel; the said control unit processes the said signals in accordance with the program stored in EPROM 5, which is specific to the generator to which the control unit is applied, and regulates the generator on the basis of the command received.

All the mini wire-feeders can therefore be identical, even if fitted to different types of machine, as a control unit with a program that receives standard signals from the mini wire-feeder and converts them into signals suitable for the specific type of machine is fitted to each generator.

The purpose of the interface is to ensure that the machine setting parameters are always displayed in the same way, even on different types of equipment, thus providing operators with a single system for controlling welding parameters so that they can be standardised in accordance with the same method.

This means that a set of sample settings corresponding to different welding situations can be determined, stored on all existing machines and then retrieved, with no need for the operator to be familiar with the operation of the machine.

For example, combinations of parameters or work programs, each corresponding to a different welding situation, can be determined in the workshop on a sample welder and then input into all machines, even if different, to obtain the same operational result.

For example, it is possible to determine the optimum current intensity and wire feed rate for welding metals of different thicknesses, and store a table containing these data in EPROM 5. The operator then merely inputs the metal thickness on the mini wire-feeder control panel; the control unit receives this information via interface 6, reads the contents of the table in the EPROM memory and inputs the parameters required for the type of welding selected, with no need for the operator to know the optimum welding current intensity or wire feed rate.

The fact that the interface is fitted to the mini wire-feeder means that the cable bundle can also be standardised, and a single cable 2 used for all the machines.

The mini wire-feeder is thus equipped with an interface able to interact with a control unit, and the operation of these two components is synchronised, with the advantage that each mini wire-feeder is no longer usable with a specific machine only, but is exchangeable with the others as required.

As will be clear from the description supplied, the method in accordance with the invention offers significant advantages, as it enables the setting and management of all types of welding machine to be standardised and allows the machines to be modernised at a limited cost, so that the fleet of machines can be adapted to incorporate new technologies.

An expert in the field could devise numerous modifications and variations, all of which should be deemed to fall within the scope of this invention.

## Claims

1. Method for standardisation of the control functions of the type of welding machine with a mini wire-feeder (3), characterised by the fact that
• a control unit (4) with a memory (5) is fitted to the generator(1);
• an interface (6) designed to transmit to the said control unit signals corresponding to the settings input from the control panel of the said mini wire-feeder is applied to the mini wire-feeder (3);
• a program designed to receive standard signals from the said interface (6) and convert them into signals specific to the type of machine to which the said control unit (4) is fitted is stored in the said memory (5) of the said control unit.

2. Method in accordance with claim 1, characterised by the fact that a table with machine setting parameters corresponding to a set of welding conditions is stored in the said memory (5) of the said control unit (4), and a combination of those parameters is selected in accordance with the signals received from the said interface.

3. Welding machine of the type with a mini wire-feeder (3), characterised by the fact that an interface (6) designed to adapt all signals received from the mini wire-feeder (3) to the characteristics of the remote generator (1) is fitted between the generator (1) and the mini wire-feeder (3), so that the operator can input all settings in the same way, even on different machines.

4. Welding machine in accordance with claim 3, characterised by the fact that it comprises:
• a control unit (4) fitted to the generator (1);
• a memory (5) connected to the said control unit (4);
• an interface (6) fitted to the mini wire-feeder (3) and connected to the said control unit (4);
• a program stored in the said memory (5) which is designed to convert standard signals received from the said interface (6) into control signals specific to the said generator (1).
